# EUROPÄISCHE PATENTSCHRIFT

(11) **EP 2 844 864 B1**
(45) Veröffentlichungstag und Bekanntmachung des Hinweises auf die Patenterteilung: **24.02.2016**
(21) Anmeldenummer: 13712529.0
(22) Anmeldetag: 22.03.2013
(51) Int. Cl.: F02M 51/06, F16F 1/32, F16K 27/02, F16K 31/06

(54) **VENTIL ZUM ZUMESSEN VON FLUID**
VALVE FOR METERING A FLUID
SOUPAPE POUR LE DOSAGE D'UN FLUIDE

(30) Priorität: 04.05.2012 DE 102012207406
(43) Veröffentlichungstag der Anmeldung: 11.03.2015
(73) Patentinhaber: Robert Bosch GmbH, 70442 Stuttgart (DE)
(72) Erfinder: KNORPP, Michael, 71287 Weissach (DE); MAYER, Michael, 72827 Wannweil (DE); BUEHNER, Martin, 71522 Backnang (DE)
(86) Internationale Anmeldenummer: PCT/EP2013/056118
(87) Internationale Veröffentlichungsnummer: WO 2013/164131

(56) Entgegenhaltungen:
- DE-A1- 10 108 945
- FR-A- 1 375 648

## Beschreibung

### Stand der Technik

Die Erfindung geht aus von einem Ventil zum Zumessen von Fluid nach dem Oberbegriff des Anspruchs 1, wobei der für ein strömendes oder fließendes Medium stehende übergeordnete Begriff Fluid in Übereinstimmung mit der Strömungslehre für Gase und Flüssigkeiten verwendet wird.

Bei einem bekannten Kraftstoffeinspritzventil (DE 101 08 945 A1) ist die Ventilnadel kraftschlüssig mit einem Magnetanker eines Elektromagneten verbunden und trägt einen Schließkörper, der zusammen mit dem Ventilsitz an der Ventilöffnung einen Dichtsitz bildet, der zum Schließen des Ventils hergestellt und zum Öffnen des Ventils aufgehoben wird. Zur Herstellung des Dichtsitzes presst eine Rückstellfeder, die sich an dem vom Schließkörper abgekehrten Ende der Ventilnadel und an einer Justierhülse abstützt, den Schließkörper auf den Ventilsitz auf. Die Ventilnadel besitzt einen kragenförmigen Ankeranschlag und einen Mitnehmerflansch, die einen sog. Vorhub des Magnetankers ermöglichen, um den sich der Magnetanker auf der Ventilnadel axial zu verschieben vermag. Eine als Schraubendruckfeder ausgebildete Vorhubfeder drückt dabei den Magnetanker kraftschlüssig an den Ankeranschlag an. Durch Bestromen des Elektromagneten wird der Anker entgegen der Federkraft von Vorhub- und Rückstellfeder in Hubrichtung bewegt. Der Gesamthub des Magnetankers ist dabei in den Vorhub und den eigentlichen Öffnungshub mit Abheben des Schließkörpers vom Ventilsitz aufgeteilt. Während des Vorhubs bleibt der Schließkörper noch auf dem Ventilsitz. Der Öffnungshub setzt ein, sobald der Anker nach Ende des Vorhubs am Mitnehmerflansch anschlägt und über diesen die Ventilnadel in Hubrichtung mitnimmt.

Ein solches Ventil hat gegenüber einem Ventil mit starrer Verbindung von Anker und Ventilnadel den Vorteil, dass die bei Ventilschließen bewegte träge Masse auf zwei Teilmassen, nämlich auf Magnetanker und Ventilnadel mit Schließkörper, aufgeteilt ist, was zu einer Geräuschminderung beim Ventilschließen führt. Vorhubfeder und Ankerfreiweg verbessern einerseits die Öffnungsdynamik des Ventils und dämpfen andererseits sog. Preller, die zu einer nicht reproduzierbaren Zumessmenge von Fluid führen. Die Öffnungsdynamik wird durch die sog. mechanische Boosterung erzielt, indem die im Schließzustand des Ventils vorgespannte Vorhubfeder den Magnetanker zusätzlich zu der Magnetkraft des Elektromagneten beschleunigt, so dass das Ventil mit einem geringeren Kraftaufwand geöffnet werden kann. Die Preller werden durch den Dämpfungseffekt der Vorhubfeder vermieden, da die Vorhubfeder beim Schließen des Ventils nach erstem Auftreffen des Schließkörpers auf den Ventilsitz eine durch Rückprellen des Magnetankers entstehende Bewegung des Magnetankers in Hubrichtung dämpft und somit ein durch Auftreffen des Magnetankers am Ankeranschlag mögliches, erneutes, kurzzeitiges Abheben des Schließkörpers vom Ventilsitz unterbindet.

Weitere Ventile mit Vorhubfeder und Ankerfreiweg sind aus DE 198 49 210 A1, DE 199 32 763 (Fig. 2) und DE 199 46 602 A1 bekannt.

### Offenbarung der Erfindung

Das erfindungsgemäße Zumessventil mit den Merkmalen des Anspruchs 1 hat gegenüber den Ventilen mit starrer Verbindung von Magnetanker und Ventilnadel den Vorteil, dass beim Schließvorgang des Ventils die bewegte träge Masse in zwei Teilmassen aufgeteilt ist, so dass durch die beim Ventilschließen auf den Ventilsitz auftreffende, gegenüber der Masse des Magnetankers deutlich kleinere Masse der Ventilnadel ein geringeres Aufschlaggeräusch erzeugt. Das für Komfortfahrzeuge wesentliche Geräuschverhalten des Ventils ist damit erheblich in Richtung Geräuschreduzierung verbessert. Durch die Membranfeder werden auch die bei den bekannten Ventilen mit Vorhubfeder und Ankerfreiweg erlangten Effekte der Boosterung beim Ventilöffnen und des Vermeidens der sog. Preller beim Ventilschließen erzielt und werden dennoch gegenüber diesen Ventilen Bauteile, wie der zusätzliche Ankeranschlag an der Ventilnadel und die als Schraubendruckfeder eingesetzte Vorhubfeder nebst Halterung eingespart.

Zusammen mit der als Handelware erhältlichen Membranfeder können dadurch die Kosten für Fertigung und Montage des Ventils reduziert werden. Mit der Membranfeder wird zugleich eine Führung des Magnetankers verwirklicht, so dass auf die zusätzliche Führung des Magnetankers im Ventilgehäuse oder auf eine obere Führung der Ventilnadel im Magnetkern des Elektromagneten mit den dabei einzuhaltenden Toleranzvorgaben verzichtet werden kann. Der Magnetanker kann darüber hinaus so gestaltet werden, dass nur die magnetisch notwendige Masse realisiert werden muss, womit das Gewicht des Elektromagneten reduziert werden kann.

Durch die in den weiteren Ansprüchen aufgeführten Maßnahmen sind vorteilhafte Weiterbildungen und Verbesserungen des im Anspruch 1 angegebenen Ventils möglich.

Gemäß einer vorteilhaften Ausführungsform der Erfindung ist die Abstützung der Membran am Ventilgehäuse so getroffen, dass bei geschlossenem Ventil und unbestromtem Elektromagneten die am Magnetanker befestigte Membran den Magnetanker in einer Nulllage festlegt, in der zwischen Magnetanker und Mitnehmerflansch ein einen Vorhubspalt definierender Axialabstand vorhanden ist. Die Membran besitzt bei in entgegengesetzten Richtungen erfolgender axialer Auslenkung aus dieser Nulllage des Magnetankers unterschiedliche Federsteifigkeiten, wobei die Federsteifigkeit bei vom Ventilsitz weg gerichteter Auslenkung klein ist und bei zum Ventilsitz hin gerichteter Auslenkung sehr groß ist, so dass ein Durchschwingen des Magnetankers durch die Nulllage unterbunden ist. Durch die geringe Federsteifigkeit der Membran in Zugrichtung des Magnetankers bei bestromtem Elektromagneten muss der Elektromagnet bei geschlossenem Ventil eine relativ kleine Magnetkraft zum Anziehen des Magnetankers aufbauen, bevor er am Ende des durch den Vorhubspalt festgelegten Ankerwegs an den Mitnehmerflansch anschlägt. Durch die hohe Federsteifigkeit der Membranfeder bei Auslenkung aus der Nulllage in umgekehrter, zum Ventilsitz weisender Richtung bietet die Membranfeder einen unteren Anschlag in der Nulllage des Magnetankers, der ein Durchschwingen des Ankers in Richtung Ventilschließen verhindert. Dadurch ist der Magnetanker immer in einer definierten Lage, was vor allem für schnell aufeinander folgende Zumessvorgänge, wie dies beim Einspritzen von Kraftstoff in Kraftstoffeinspritzanlagen mit Mehrfacheinspritzung der Fall ist, von erheblicher Bedeutung ist.

Gemäß einer vorteilhaften Ausführungsform der Erfindung weist die Membranfeder einen äußeren und einen inneren Federring und mehrere die beiden Federringe miteinander verbindende Federstege auf. Der innere Federring, der einem gegenüber dem Außendurchmesser des ringförmigen oder hohlzylindrischen Magnetankers deutlich kleineren Außendurchmesser aufweist, ist an der zum Ventilsitz weisenden Unterseite des Magnetankers und der äußere Federring, dessen lichter Durchmesser etwas kleiner ist als der Außendurchmesser des Magnetankers, ist am Ventilgehäuse befestigt. Durch diese konstruktive Ausführung werden die unterschiedlichen Federsteifigkeiten der Membranfeder bei Auslenkung in entgegengesetzten Richtungen in einfacher Weise realisiert. Bei Bewegung des Magnetankers weg vom Ventilsitz wird durch die Federstege in der Membran eine große frei Weglänge mit kleiner Federsteifigkeit geschaffen. Bei Bewegung des Magnetankers in Richtung Ventilsitz setzt sich der Magnetanker zunehmend flächig auf die Membran auf und die freie Weglänge der Federstege wird zunehmend verkürzt und in der Nulllage des Mangetankers nur auf den Abstand zwischen dem Außendurchmesser des Magnetankers und dem Abstützpunkt an dem Ventilgehäuse beschränkt, wodurch die sehr hohe Federsteifigkeit der Membran gegeben ist.

### Kurze Beschreibung der Zeichnungen

Die Erfindung ist anhand eines in den Zeichnungen dargestellten Ausführungsbeispiels in der nachfolgenden Beschreibung näher erläutert. Es zeigen:
- Figur 1: einen Längsschnitt eines Ventils zum Zumessen von Fluid,
- Figur 2: eine vergrößerte Darstellung des Ausschnitts II in Figur 1,
- Figur 3: eine Draufsicht einer Membranfeder im Ventil gemäß Figur 1 und 2.

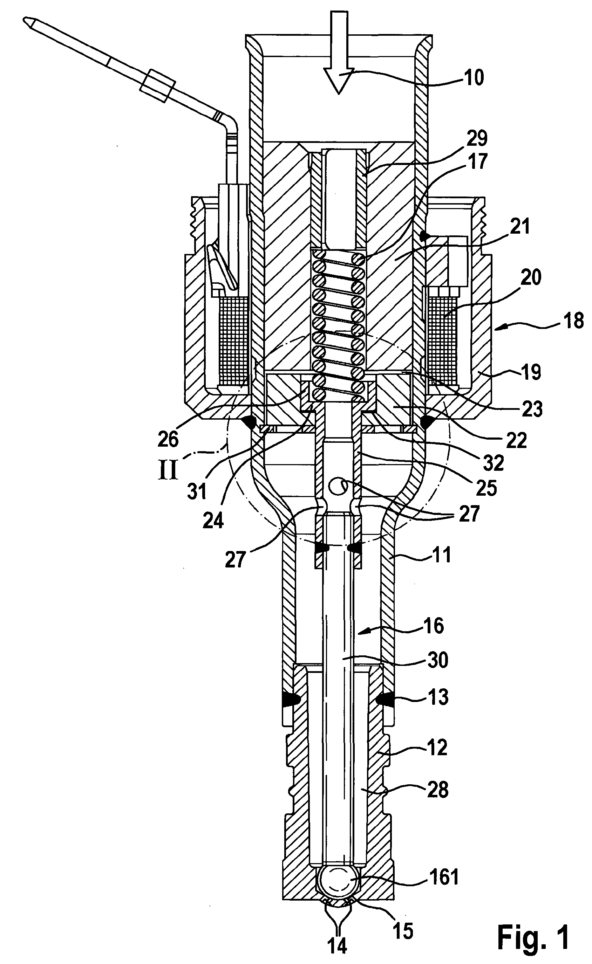

Das in Figur 1 im Längsschnitt dargestellte Ventil zum Zumessen von Fluid, wird beispielsweise als Einspritzventil zum Einspritzen von Kraftstoff in einer Kraftstoffeinspritzanlage von Brennkraftmaschinen eingesetzt. Das Ventil weist ein hülsenförmiges Ventilgehäuse 11 auf, in dessen zumessseitiges Ende ein Ventilkörper 12 und in dessen zulaufseitiges Ende ein hier nicht dargestellter Anschlussstutzen zum Anschließen einer Fluidleitung für einen durch Pfeil 10 symbolisierten Zulauf von Fluid jeweils fluiddicht eingesetzt ist. Der Ventilkörper 12 ist stoffschlüssig mit dem Ventilgehäuse 11 verbunden, wobei der Stoffschluss durch die Schweißnaht 13 symbolisiert ist. Im Ventilkörper 12 ist eine zwei Abspritzbohrungen aufweisende Zumess- oder Ventilöffnung 14 mit einem die Ventilöffnung 14 umgebenden Ventilsitz 15 ausgebildet. Eine im Ventilgehäuse 11 axial verschiebliche Ventilnadel 16 ist zum wechselweisen Schließen und Öffnen des Ventils, also zum Schließen und Freigeben der Ventilöffnung 14, mit einem auf den Ventilsitz 15 aufsetzbaren und vom Ventilsitz 15 abhebbaren Schließkörper 161 versehen. Die Ventilnadel 16 ist über ihren hier kugelförmig ausgebildeten Schließkörper 161 im Ventilkörper 12 axial verschieblich geführt. Die Ventilnadel 16 ist im Ausführungsbeispiel aus einem massiven Stab 30, der endseitig den Schließkörper 161 trägt, und einer Hülse 25 zusammengesetzt. Die auf das vom Schließkörper 161 abgekehrten Ende des Stabs 30 aufgesetzte und mit diesem verschweißte Hülse 25 weist mindestens eine Bohrung 27 auf, über die eine Fluidverbindung vom Fluidzulauf 10 zu einer dem Ventilsitz 15 mit Ventilöffnung 14 vorgelagerten Ventilkammer 28 hergestellt ist. Alternativ kann die Ventilnadel 16 auch einstückig hohlzylindrisch mit entsprechenden Bohrungen 27 ausgebildet sein. Zum Schließen des Ventils ist die Ventilnadel 16 von einem Rückstellorgan 17 beaufschlagt, das z. B. eine zwischen Ventilnadel 16 und einer Einstell- oder Justierhülse 29 sich abstützende Druckfeder aufweist. Das Öffnen des Ventils erfolgt mittels eines auf die Ventilnadel 16 wirkenden Elektromagneten 18, der in bekannter Weise einen Magnettopf 19, eine Magnetspule 20, einen Magnetkern 21 und einen Magnetanker 22 aufweist. Der Magnettopf 19 ist auf das Ventilgehäuse 11 aufgeschoben und mit seinem Topfboden am Ventilgehäuse 11 verschweißt und nimmt die Magnetspule 22 axial unverschieblich auf. Der hohlzylindrische Magnetkern 21 ist formschlüssig in das Ventilgehäuse 11 eingesetzt und nimmt im hohlen Kerninnern die Druckfeder und die Justierhülse 29 des Rückstellorgans 17 auf. Der Magnetanker 22 sitzt axial verschieblich auf der Ventilnadel 16, genauer gesagt auf der Hülse 25, und begrenzt zusammen mit dem zu ihm koaxial angeordneten Magnetkern 21 einen Arbeitsluftspalt 23 des Elektromagneten 18. An der Ventilnadel 16 ist ein Mitnehmerflansch 24 angeordnet, über den der bei Bestromung des Elektromagneten 18 zur Hubbewegung angetriebenen Magnetanker 22 die Ventilnadel 16 mitnimmt. Der Mitnehmerflansch 24 ist im Ausführungsbeispiel an der Hülse 25 angeformt. Die Hülse 25 weist an ihrem vom Schließkörper 161 abgekehrten Ende einen Führungsbund 26 auf, in den das ventilnadelseitige Ende der Druckfeder des Rückstellorgans 17 eintaucht und sich am Grund abstützt. Bei der alternativen, einstückig hohlzylindrischen Ausführung der Ventiladel 16 sind der Mitnehmerflansch 24 und der die Druckfeder abstützende Führungsbund 26 dann einstückig an die Ventilnadel 16 angeformt.

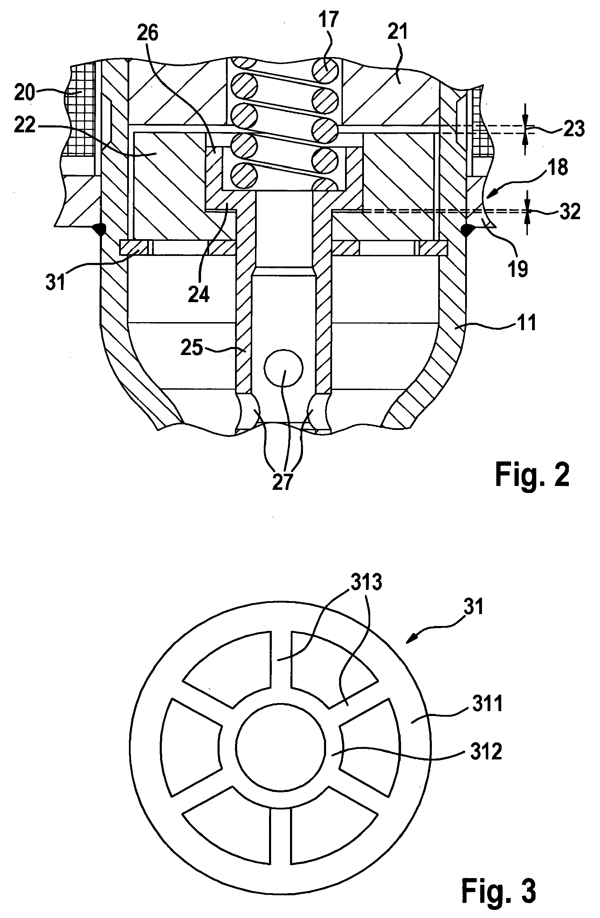

Der auf der Ventilnadel 16, genauer gesagt hier auf der Hülse 25, sitzende Magnetanker 22 ist über eine Membranfeder 31 am Ventilgehäuse 11 abgestützt. Die Abstützung am Ventilgehäuse 11 ist dabei so getroffen, dass bei geschlossenem Ventil und unbstromtem Elektromagneten 18 die am Magnetanker 22 befestigte Membranfeder 31 den Magentanker 22 in einer Nulllage festlegt, in der zwischen Magnetanker 22 und Mitnehmerflansch 24 ein einen Vorhubspalt 32 definierender Axialabstand vorhanden ist (Figur 2). Die Membranfeder 31 besitzt bei in entgegengesetzten Richtungen erfolgender axialer Auslenkung aus der Nulllage unterschiedliche Federsteifigkeiten. Bei vom Ventilsitz 15 weg gerichteter Auslenkung aus der Nulllage ist die Federsteifigkeit klein. Bei zum Ventilsitz 15 hin gerichteter Auslenkung aus der Nulllage ist die Federsteifigkeit so groß, dass ein Durchschwingen des Magnetankers 22 durch seine Nulllage beim Ventilschließen unterbunden ist.

Wie in Figur 3 zu sehen ist, weist die Membranfeder 31 einen äußeren Federring 311 und einen inneren Federring 312 und mehrere, die beiden Federringe 311, 312 miteinander verbindende Federstege 313 auf. Der Außendurchmesser des inneren Federrings 312 ist dabei deutlich kleiner als der Außendurchmesser des ringförmigen oder hohlzylindrischen Magnetankers 22, während der innere Durchmesser des äußeren Federrings 311 etwas kleiner als der Außendurchmesser des Magnetankers 22 bemessen ist. Der innere Federring 312 ist an der dem Ventilsitz 15 zugekehrten Unterseite des Magnetankers 22 und der äußere Federring 311 am Ventilgehäuse 11 befestigt. Bewegt sich der Magnetanker 22 unter der durch Bestromung der Magnetspule 20 des Elektromagneten 18 entstehenden Magnetkraft in Hubrichtung, also weg vom Ventilsitz 15, wird durch die Federstege 313, die sich von der Unterseite des Magnetkerns 21 zunehmend abheben, eine große freie Weglänge geschaffen und dadurch eine geringe Federsteifigkeit der Membranfeder 31 erzielt. In entgegengesetzter Bewegungsrichtung des Magnetankers 22 legen sich die Federstege 313 zunehmend auf die Unterseite des Magnetkerns 21 auf, so dass die freie Weglänge der Federstege 313 zunehmend verkürzt wird und in der Nulllage des Magentankers 22 auf den Abstand zwischen Außendurchmesser des Magnetankers und dem Abstützpunkt am Ventilgehäuse 11 beschränkt ist, wodurch die Membranfeder 31 die sehr hohe Steifigkeit besitzt und ein Durchschwingen des Magnetankers 22 über die Nulllage in Richtung Ventilsitz 15 unterbindet.

In der in Figur 1 und 2 dargestellten Nulllage des Magnetankers 22 ist das Ventil in Ruhestellung, d. h. bei unbestromten Elektromagneten 18, geschlossen. Die Druckfeder des Rückstellorgans 17 drückt den Schließkörper 161 auf den Ventilsitz 15 auf, die Membranfeder 31 hält den Magnetanker 22 in dessen Nulllage. Der zwischen Magnetanker 22 und Magnetkern 21 liegende Arbeitsluftspalt 23 hat seine maximale Spalthöhe und der zwischen Magnetanker 22 und Mitnehmerflansch 24 vorhandene Vorhubspalt 32 besitzt ebenfalls maximale Spaltbreite. Mit Bestromen des Elektromagneten 18 bewegt sich der Mangetanker 22 in Hubrichtung nach oben, wobei zunächst der Vorhubspalt 32 geschlossen wird, ohne dass sich der Schließkörper 161 der Ventilnadel 16 vom Ventilsitz 15 abhebt. Durch die geringe Federsteifigkeit der Membranfeder 31 ist, ähnlich wie bei der mechanischen Boosterung, die zum Bewegen des Magnetankers 22 aus dessen Nulllage erforderliche Magnetkraft relativ gering, so dass die Magnetleistung des Elektromagneten 18 klein gehalten werden kann.

Bei Abschalten des Elektromagneten 18 drückt die Druckfeder des Rückstellorgans 17 die Ventilnadel 16 mit dem Schließkörper 161 auf den Ventilsitz 15, wobei über den Mitnehmerflansch 24 der Magnetanker 22 in Richtung Ventilsitz 15 bis in seine durch die Membranfeder 31 festgelegte Nulllage mitgenommen wird. Durch die sehr hohe Federsteifigkeit der Membranfeder 31 gegen Auslenkung aus der Nulllage in Richtung Ventilsitz 15 bildet die Membranfeder 31 einen federnden Anschlag für den Magnetanker 22, so dass dieser immer eine definierte Lage einnimmt.

## Patentansprüche

1. Ventil zum Zumessen von Fluid, mit einem Ventilgehäuse (11), an dem eine von einem Ventilsitz (15) umschlossene Ventilöffnung (14) ausgebildet ist, mit einer Ventilnadel (16), die zum wechselweisen Schließen und Öffnen des Ventils mit einem auf den Ventilsitz (15) aufsetzbaren und vom Ventilsitz (15) abhebbaren Schließkörper (161) versehen ist, mit einem zum Ventilschließen die Ventilnadel (16) beaufschlagenden Rückstellorgan (17) und mit einem einen Magnetanker (22) aufweisenden, bestrombaren Elektromagneten (18), dessen zu einer Hubbewegung antreibbarer Magnetanker (22) verschieblich auf der Ventilnadel (16) sitzt und zum Öffnen des Ventils die Ventilnadel (16) über einen an dieser angeordneten Mitnehmerflansch (24) in Hubrichtung mitnimmt, **gekennzeichnet durch** eine den Magnetanker (22) am Ventilgehäuse (11) abstützende Membranfeder (31).

2. Ventil nach Anspruch 1, **dadurch gekennzeichnet, dass** die Abstützung der Membranfeder (31) am Ventilgehäuse (11) so getroffen ist, dass bei geschlossenem Ventil und unbestromtem Elektromagneten (18) die am Magnetanker (22) befestigte Membranfeder (31) den Magnetanker (22) in einer Nulllage festlegt, in der zwischen Magnetanker (22) und Mitnehmerflansch (24) ein einen Vorhubspalt (34) definierender Axialabstand vorhanden ist.

3. Ventil nach Anspruch 2, **dadurch gekennzeichnet, dass** die Membranfeder (31) bei in entgegengesetzten Richtungen erfolgender axialer Auslenkung aus der Nulllage unterschiedliche Federsteifigkeiten in der Weise aufweist, dass die Federsteifigkeit bei vom Ventilsitz (15) weg gerichteter Auslenkung klein ist und bei zum Ventilsitz (15) hin gerichteter Auslenkung so groß ist, dass ein Durchschwingen des Magnetankers (22) durch die Nulllage unterbunden ist.

4. Ventil nach Anspruch 3, **dadurch gekennzeichnet, dass** die Membranfeder (31) einen äußeren und einen inneren Federring (311, 312) und die Federringe (311, 312) miteinander verbindende Federstege (313) aufweist und dass der innere Federring (312) an der zum Ventilsitz (15) weisenden Unterseite des Magnetankers (22) und der äußere Federring (311) am Ventilgehäuse (11) befestigt ist.

5. Ventil nach Anspruch 4, **dadurch gekennzeichnet, dass** der Außendurchmesser des inneren Federrings (312) deutlich kleiner ist als der Außendurchmesser des Magnetankers (22) und der Innendurchmesser des äußeren Federrings (311) kleiner ist als der Außendurchmesser des Magnetankers (22).

## Claims

1. Valve for metering a fluid, having a valve housing (11), on which a valve opening (14) which is enclosed by a valve seat (15) is configured, having a valve needle (16) which is provided with a closing body (161) which can be placed onto the valve seat (15) and raised up from the valve seat (15) for selectively closing and opening the valve, having a restoring member (17) which loads the valve needle (16) for closing the valve, and having an energizable electromagnet (18) which has a magnet armature (22) which can be driven to perform a reciprocating movement, is seated displaceably on the valve needle (16) and, in order to open the valve, drives the valve needle (16) in the reciprocating direction via a driver flange (24) which is arranged on the said valve needle (16), **characterized by** a diaphragm spring (31) which supports the magnet armature (22) on the valve housing (11).

2. Valve according to Claim 1, **characterized in that** the diaphragm spring (31) is supported on the valve housing (11) in such a way that, when the valve is closed and the electromagnet (18) is de-energized, the diaphragm spring (31) which is fastened to the magnet armature (22) fixes the magnet armature (22) in a zero position, in which there is an axial spacing which defines a pre-stroke gap (34) between the magnet armature (22) and the driver flange (24).

3. Valve according to Claim 2, **characterized in that**, in the case of an axial deflection out of the zero position which takes place in opposite directions, the diaphragm spring (31) has different spring stiffnesses in such a way that the spring stiffness is low in the case of a deflection which is directed away from the valve seat (15) and is so high in the case of a deflection which is directed towards the valve seat (15) that swing-through of the magnet armature (22) through the zero position is suppressed.

4. Valve according to Claim 3, **characterized in that** the diaphragm spring (31) has an outer and an inner spring ring (311, 312) and spring webs (313) which connect the spring rings (311, 312) to one another, and **in that** the inner spring ring (312) is fastened to the underside of the magnet armature (22), which underside points towards the valve seat (15), and the outer spring ring (311) is fastened to the valve housing (11).

5. Valve according to Claim 4, **characterized in that** the external diameter of the inner spring ring (312) is considerably smaller than the external diameter of the magnet armature (22), and the internal diameter of the outer spring ring (311) is smaller than the external diameter of the magnet armature (22).

## Revendications

1. Soupape pour le dosage d'un fluide, comprenant un boîtier de soupape (11) au niveau duquel est réalisée une ouverture de soupape (14) entourée par un siège de soupape (15), comprenant un pointeau de soupape (16) qui est pourvu, pour la fermeture et l'ouverture alternées de la soupape, d'un corps de fermeture (161) pouvant être posé sur le siège de soupape (15) et soulevé du siège de soupape (15), comprenant un organe de rappel (17) sollicitant le pointeau de soupape (16) pour fermer la soupape et comprenant un électroaimant (18) pouvant être alimenté en courant, présentant une armature d'aimant (22), dont l'armature d'aimant (22), pouvant être entraînée en vue d'un mouvement de course, repose de manière déplaçable sur le pointeau de soupape (16) et, pour l'ouverture de la soupape, entraîne avec elle, dans la direction de levage, le pointeau de soupape (16) par le biais d'une bride d'entraînement (24) disposée sur celui-ci, **caractérisée par** un ressort à membrane (31) supportant l'armature d'aimant (22) sur le boîtier de soupape (11).

2. Soupape selon la revendication 1, **caractérisée en ce que** le support du ressort à membrane (31) sur le boîtier de soupape (11) est tel que lorsque la soupape est fermée et que l'électroaimant (18) n'est pas parcouru par un courant, le ressort à membrane (31) fixé sur l'armature d'aimant (22) fixe l'armature d'aimant (22) dans une position nulle dans laquelle il existe une distance axiale définissant une fente de pré-course (34) entre l'armature d'aimant (22) et la bride d'entraînement (24).

3. Soupape selon la revendication 2, **caractérisée en ce que** le ressort à membrane (31), lors d'une déviation axiale depuis la position nulle se produisant dans des directions opposées, présente différentes rigidités de ressort, de telle sorte que la rigidité de ressort, lorsque la déviation est orientée à l'écart du siège de soupape (15), soit petite et, lorsque la déviation est orientée vers le siège de soupape (15), soit suffisamment grande pour qu'une oscillation de l'armature d'aimant (22) au-delà de la position nulle soit empêchée.

4. Soupape selon la revendication 3, **caractérisée en ce que** le ressort à membrane (31) présente une bague de ressort extérieure et une bague de ressort intérieure (311, 312) et des nervures de ressort (313) reliant l'une à l'autre les bagues de ressort (311, 312), et **en ce que** la bague de ressort intérieure (312) est fixée au côté inférieur de l'armature d'aimant (22) tourné vers le siège de soupape (15) et la bague extérieure (311) est fixée au boîtier de soupape (11).

5. Soupape selon la revendication 4, **caractérisée en ce que** le diamètre extérieur de la bague de ressort intérieure (312) est nettement plus petit que le diamètre extérieur de l'armature d'aimant (22) et le diamètre intérieur de la bague de ressort extérieure (311) est inférieur au diamètre extérieur de l'armature d'aimant (22).
